# EUROPÄISCHE PATENTANMELDUNG

(11) **EP 1 078 609 A2**
(43) Veröffentlichungstag der Anmeldung: **28.02.2001**
(21) Anmeldenummer: 99123268.7
(22) Anmeldetag: 29.11.1999
(51) Int. Cl.: A61C 17/26, A61C 17/34

(54) **Elektrisch antreibbare Zahnbürste**

(30) Priorität: 25.08.1999 DE 19940369
(71) Anmelder: Perfect Steam Appliance Ltd., Fotan, Shatin, N.T. (HK)
(72) Erfinder: Cheng, Rocky, Valiant Ind. Building Centre, Fotan, Shatin, N.T. (HK)
(74) Vertreter: Söltenfuss, Dirk Christian, Dipl.-Phys.

(57) **Zusammenfassung**

Elektrisch antreibbare Zahnbürste, mit einem mit einer Antriebswelle (12, 15) verbundenen Bürstenkopf (18), wobei der Bürstenkopf drehbar um seine Längsachse gelagert ist; einem in einem Handgriff (1) angeordneten Elektromotor (9); und einem Getriebe (11), das eingangsseitig mit dem Elektromotor (9) und ausgangsseitig mit der Antriebswelle (12, 15) des Bürstenkopfes (18) gekoppelt ist. Das geräuscharme Getriebe (11) mit hohem Wirkungsgrad weist erfindungsgemäß ein erstes Exzenterrad (33) auf einer Getriebewelle (31), die im wesentlichen senkrecht zu der Antriebswelle (12, 15) angeordnet ist, ein zweites Exzenterrad (34) auf der Welle (31) und ein mit dem ersten und dem zweiten Exzenterrad (33, 34) gekoppeltes Antriebsrad (32) auf, wobei das erste Exzenterrad (33) in einer kreisrunden Ausnehmung (39) einer Halterung (41) der Antriebswelle (12, 15) aufgenommen ist, um die Antriebswelle (12, 15) nach oben und unten zu bewegen, und das zweite Exzenterrad (34) in einer ovalen Ausnehmung (40) der Halterung (41) aufgenommen ist, um die Hubbewegung der Antriebswelle (12, 15) zu stabilisieren.

## Beschreibung

Die vorliegende Erfindung betrifft eine elektrisch antreibbare Zahnbürste, insbesondere eine elektrisch antreibbare Zahnbürste mit einem oszillierend drehbaren Bürstenkopf, nach dem Oberbegriff von Anspruch 1.

Derartige elektrische Zahnbürsten sind bereits vielfach aus der Praxis und der Literatur bekannt. Diese Zahnbürsten bestehen im allgemeinen aus einem Handgriff, in dem sich ein Akku, ein Elektromotor und ein eingangsseitig mit dem Elektromotor verbundenes Getriebe befinden. Das Getriebe treibt eine Antriebswelle an, die üblicherweise parallel zur Längsachse des länglichen Handgriffs angeordnet ist und oben aus dem Handgriff herausgeführt ist. Auf diese Antriebswelle ist ein im allgemeinen austauschbarer Bürstenaufsatz aufsetzbar.

Der Bürstenaufsatz weist seinerseits eine Antriebswelle auf, die direkt mit der Antriebswelle des Handgriffs verbunden wird, so daß eine verlängerte Antriebswelle gebildet wird. Ferner ist der Bürstenaufsatz mit einem Bürstenkopf versehen, der derart gelagert ist, daß er oszillierende Rotationsbewegungen ausführen kann. Der Bürstenkopf ist über eine Umsteuerungsvorrichtung mit der Antriebswelle gekoppelt. Der Bürstenkopf ist dabei zumeist so ausgerichtet, daß seine Mittelachse etwa senkrecht zur Längsachse der Antriebswellen verläuft. Es existieren aber auch Zahnbürsten, deren Bürstenköpfe eine Mittelachse aufweisen, die parallel zur Längsachse der Antriebswellen ausgerichtet ist.

Eine derartige elektrisch antreibbare Zahnbürste ist beispielsweise aus der DE 39 37 854 A1 bekannt. Die darin offenbarte Zahnbürste weist alle Merkmale des Oberbegriffs von Anspruch 1 auf. Insbesondere weist diese elektrisch antreibbare Zahnbürste einen in einem Handgriff angeordneten Elektromotor auf, der über ein Getriebe und eine von diesem angetriebene Umsteuerungsvorrichtung einen drehbar gelagerten Bürstenkopf oszillierend antreibt. Das Getriebe ist als Gelenkviereck ausgebildet, das eingangsseitig über ein Stirnrädergetriebe von dem Elektromotor angetrieben wird und ausgangsseitig eine Antriebswelle in einem Winkelbereich von etwa ± 35° oszillierend antreibt.

Neben diesen Zahnbürsten mit oszillierend drehbarem Bürstenkopf existieren auch Zahnbürsten mit Bürstenköpfen, die Schwenk- oder Pendelbewegungen ausführen oder auch zwei Oszillationsbewegungen überlagern. Derartige Zahnbürsten erfordern im allgemeinen ein anders konstruiertes Getriebe zur Erzeugung dieser Bürstenkopf-Bewegungen.

Ausgehend von dem genannten Stand der Technik ist es eine Aufgabe der vorliegenden Erfindung, eine elektrisch antreibbare Zahnbürste mit einem oszillierend drehbaren Bürstenkopf bereitzustellen, die einen sehr hohen Wirkungsgrad aufweist und deren Getriebe geräuscharm ist.

Diese Aufgabe wird durch eine elektrisch antreibbare Zahnbürste mit den Merkmalen von Anspruch 1 gelöst.

Das in der erfindungsgemäßen Zahnbürste eingesetzte Getriebe weist ein erstes und ein zweites Exzenterrad, die auf einer Getriebewelle gehalten sind, die im wesentlichen senkrecht zu der Antriebswelle angeordnet ist, und ein mit dem ersten und dem zweiten Exzenterrad gekoppeltes Antriebsrad auf. Das erste Exzenterrad ist in einer kreisrunden Ausnehmung in der Halterung für die Antriebswelle aufgenommen und setzt die Drehbewegung des Antriebsrades in eine Hubbewegung der Antriebswelle um. Das zweite Exzenterrad ist in einer ovalen Ausnehmung in der Halterung aufgenommen, um die Bewegung der Antriebswelle zu stabilisieren. Hierdurch wird zum einen ein sehr hoher Wirkungsgrad des Getriebes erzielt, d.h. nahezu die gesamte vom Elektromotor eingespeiste Energie wird in die Hubbewegung der Antriebswelle umgesetzt, und zum anderen arbeitet dieses Getriebe sehr geräuscharm.

Vorteilhafterweise sind das erste und das zweite Exzenterrad derart auf der Getriebewelle befestigt sind, daß ihre Exzentrizitäten bezüglich der Getriebewelle genau entgegengesetzt ausgerichtet sind, wobei die Exzentrizität des ersten Exzenterrades größer als die des zweiten Exzenterrades ist, so daß der Hub der Antriebswelle durch die Summe der Exzentrizitäten der beiden Exzenterräder gegenüber der Getriebewelle bestimmt wird.

Weiter ist es von Vorteil, die Antriebswelle durch ein oder mehrere Kugellager im Innern des Handgriffs zu führen. Durch die Schmierwirkung der Kugellager können Reibungs-, Überhitzungs- und Abnutzungseffekte der Antriebswelle reduziert werden.

Weitere vorteilhafte Ausgestaltungen und Weiterbildungen der Erfindung sind Gegenstand weiterer Unteransprüche.

Die obigen Vorteile und Merkmale sowie weitere Vorteile und Merkmale der Erfindung werden nachfolgend anhand eines bevorzugten Ausführungsbeispiels unter Bezugnahme auf die beiliegenden Zeichnungen näher beschrieben. Darin zeigen:
- Fig. 1: eine Seitenansicht einer elektrisch antreibbaren Zahnbürste mit Halterung im Schnitt gemäß einem Ausführungsbeispiel der vorliegenden Erfindung;
- Fig. 2A und 2B: zwei Seitenansichten eines Bürstenaufsatzes der elektrisch antreibbaren Zahnbürste von Fig. 1;
- Fig. 3: eine vergrößerte Darstellung des in Fig. 2A und 2B gezeigten Bürstenaufsatzes im Schnitt;
- Fig. 4: eine vergrößerte Darstellung des Getriebes der elektrisch antreibbaren Zahnbürste von Fig. 1;
- Fig. 5: ein Diagramm zur Erläuterung des Aufbaus des in Fig. 4 gezeigten Getriebes der elektrisch antreibbaren Zahnbürste; und
- Fig. 6: ein Diagramm zur Erläuterung der Funktionsweise des in Fig. 4 und 5 gezeigten Getriebes der elektrisch antreibbaren Zahnbürste.

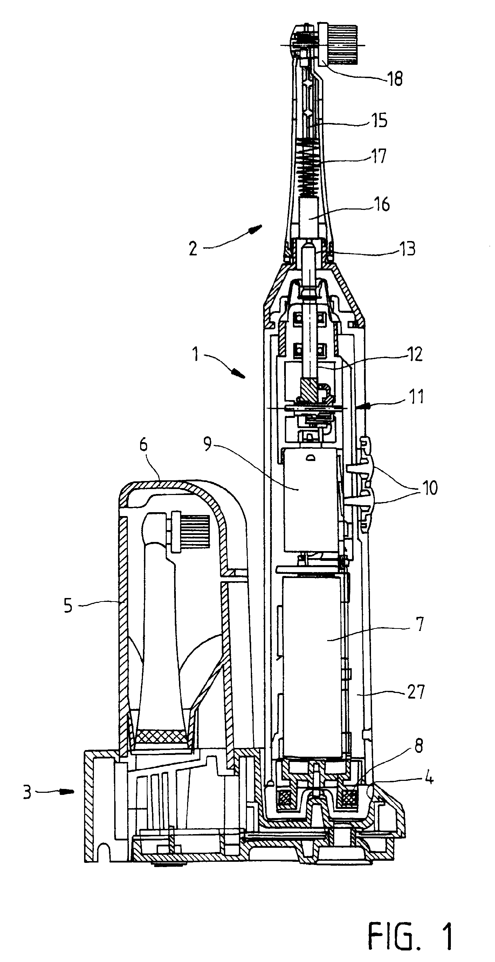

Fig. 1 zeigt zunächst ein Ausführungsbeispiel einer elektrisch antreibbaren Zahnbürste in Gesamtdarstellung im Schnitt. Die elektrisch antreibbare Zahnbürste besteht im wesentlichen aus einem als Handgriff dienenden Gehäuseteil 1, einem darauf aufgesetzten Bürstenaufsatz 2 und einer Halterung 3 zur Aufbewahrung der elektrisch antreibbaren Zahnbürste.

Die Halterung 3 besitzt eine Ausnehmung 4 zur lösbaren Aufnahme des unteren Endes des Handgriffes 1, wenn die Zahnbürste nicht benutzt wird. Die Halterung 3 ist beispielsweise mittels Schrauben an einer Wand befestigbar oder auf einer Ablage aufstellbar. Weiter ist ein Aufbewahrungsfach 5 für einen oder mehrere Bürstenaufsätze 2 an der Halterung 3 vorgesehen. Aus hygienischen Gründen ist dieses Aufbewahrungsfach 5 vorzugsweise mit einem aufklappbaren Deckel 6 verschlossen. Das Aufbewahrungsfach 5 dient der Aufbewahrung von Bürstenaufsätzen von einem oder mehreren gemeinsamen Benutzern der elektrisch antreibbaren Zahnbürste.

Weiter ist die Halterung 3 mit einem Netzanschlußkabel (nicht gezeigt) versehen, um bei eingestelltem Handgriff 1 den in dem Handgriff 1 angeordneten Akku 7 wiederaufladen zu können. Das Aufladen des Akkus 7 erfolgt vorzugsweise induktiv über eine Spule 8, die am unteren Ende des Handgriffs 1 in diesem vorgesehen und mit dem Akku verbunden ist. Die Halterung 3 dient somit gleichzeitig als Ladestation für die elektrisch antreibbare Zahnbürste. Die induktive Kopplung ist insbesondere vorteilhaft, da bei dieser Ausführungsform keine elektrischen Kontakte am Handgriff 1 und auch an der Halterung 3 vorhanden sind, mit denen die Benutzer der elektrisch antreibbaren Zahnbürste in Berührung kommen könnten.

Der Akku 7 ist mit einem ebenfalls im Handgriff 1 untergebrachten Elektromotor 9 verbunden und dient diesem als Stromquelle. An der Außenseite des Handgriffs 1 ist etwa in Höhe des Elektromotors 9 ein Schalter 10 zum Ein- und Ausschalten des Elektromotors 9 angebracht. Der Schalter 10 ist beispielsweise als ein Kippschalter oder Schiebeschalter ausgebildet.

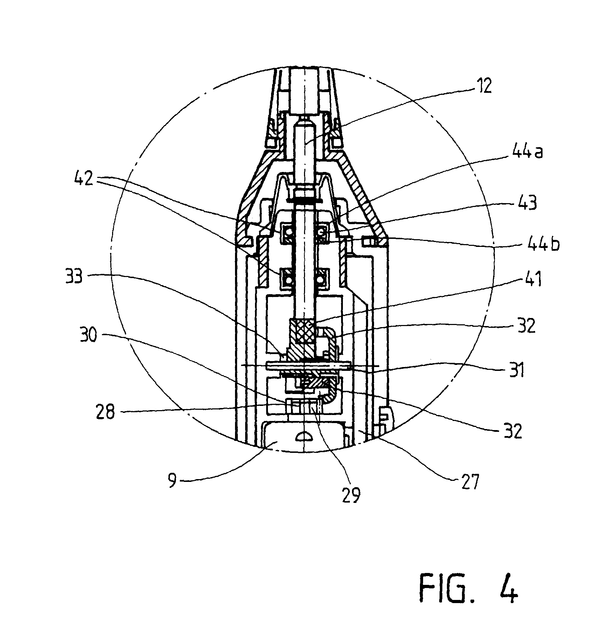

Der Elektromotor 9 ist ausgangsseitig mit dem Getriebe 11 der elektrisch antreibbaren Zahnbürste verbunden. Das Getriebe 11 ist seinerseits ausgangsseitig mit einer Antriebswelle 12 verbunden, die etwa parallel zur Längsachse des Handgriffs 1 ausgerichtet ist. Das Getriebe 11 wird weiter unten anhand der Fig. 4 bis 6 näher beschrieben.

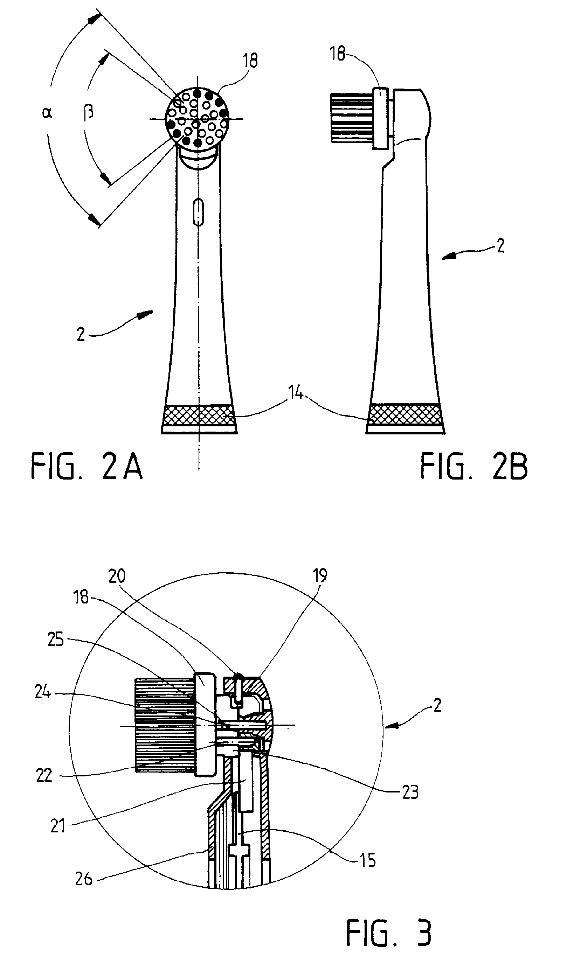

Die Antriebswelle 12 erstreckt sich aus dem oberen Ende des Handgriffs 1 heraus (13). Auf diesen Fortsatz 13 der Antriebswelle 12 ist der Bürstenaufsatz 2 aufsteckbar. Üblicherweise sind mehrere Bürstenaufsätze 2 für eine elektrisch antreibbare Zahnbürste vorgesehen, so daß diese von mehreren Benutzern gemeinsam benutzt werden kann. Um die Bürstenaufsätze 2 der einzelnen Benutzer voneinander unterscheiden zu können, ist es bekannt, die Bürstenaufsätze 2 mit farbigen Ringen 14 unterschiedlicher Farben zu versehen (siehe Fig. 2A und 2B).

Der längliche Bürstenaufsatz 2 weist ebenfalls eine Antriebswelle 15 auf, die sich in Verlängerung der Antriebswelle 12 des Handgriffs 1 ebenfalls parallel zur Längsachse des Bürstenaufsatzes 2 und des Handgriffs 1 erstreckt. Die Antriebswelle 15 ist an ihrem unteren Ende mit einem Kupplungselement 16 versehen, welches in das obere Ende des Fortsatzes 13 der Antriebswelle 12, welches zum Beispiel etwa kugelförmig ausgebildet sein kann, eingreift, wodurch die beiden Antriebswellen 12, 15 miteinander drehgekoppelt werden. Beim Aufsetzen des Bürstenaufsatzes 2 muß das Kupplungselement 16 gegen die Kraft einer Feder 17 nach innen gedrückt werden, um den Fortsatz 13 aufzunehmen. Zum Entfernen des Bürstenaufsatzes 2 vom Handgriff 1 genügt eine geringe Kraftaufwendung, um das Kupplungselement 16 mit Unterstützung der Federkraft 17 vom Fortsatz 13 der Antriebswelle 12 zu lösen.

Am oberen Ende des Bürstenaufsatzes 2 ist ein Bürstenkopf 18 angebracht. Dieser Bürstenkopf 18 ist derart an dem Bürstenaufsatz angebracht, daß seine Mittelachse etwa senkrecht zur Antriebswelle 15 ausgerichtet ist. Anstelle der Ausrichtung des Bürstenkopfes 18 in einem rechten Winkel zur Längsachse der Zahnbürste sind ebenso beliebige andere Winkelstellungen möglich.

Wie in den Fig. 2A und 2B dargestellt, hat der Bürstenkopf 18 im vorliegenden Ausführungsbeispiel eine kreisförmige Kontur. Der Bürstenkopf 18 ist an dem Bürstenaufsatz 2 derart drehbar gelagert, daß er auf einen Winkelbereich α von etwa 100° nach beiden Seiten beschränkt ist. Die Beschränkung des Rotationswinkels erfolgt durch eine Bewegungsführung 19, 20, wie unten anhand von Fig. 3 näher erläutert werden wird. Weiter wird der Bürstenkopf 18 durch das Getriebe 11 im Handgriff 1 in einem Winkelbereich β von etwa 79° nach beiden Seiten oszillierend gedreht. Die Funktionsweise des Getriebes 11 wird weiter unten näher beschrieben.

Fig. 3 zeigt nun einen vergrößerten Ausschnitt des oberen Endes des Bürstenaufsatzes 2 im Schnitt. Am oberen Ende der Antriebswelle 15 ist ein Bürstenträger 21 angebracht. Der Bürstenträger 21 ist mit einer auf einer Exzenterwelle 22 sitzenden Exzenterscheibe 23 verbunden. Die Exzenterscheibe 23 sitzt weiter auf einer Hauptwelle 24 vorzugsweise aus Metall, die auf der Mittelachse des Bürstenkopfes 18 verläuft, wobei die Exzenterwelle 22 und die Hauptwelle 24 im wesentlichen senkrecht zur Antriebswelle 15 orientiert sind. Auf der Hauptwelle 24 ist nun der Bürstenkopf 18 mit Hilfe einer Führungshülse 25 befestigt. Die beiden Wellen 22, 24 sowie der Bürstenträger 21 sind in einem Bürstenkopfgehäuse 26 des Bürstenaufsatzes 2 untergebracht.

Die Exzenterscheibe 23 weist an ihrer nach oben gerichteten Seite einen Schlitz 19 auf, in den ein am Bürstenkopfgehäuse 26 angebrachter Stift 20 eingreift. Der Schlitz 19 dient als Bewegungsführung für den Bürstenkopf 18 und beschränkt den möglichen Rotationsbereich des Bürstenkopfes 18 auf beispielsweise etwa ± 100°.

Die mit der Antriebswelle 12 des Handgriffs 1 verbundene Antriebswelle 15 wird durch das Getriebe, wie weiter unten beschrieben, nach oben und unten bewegt. Hierdurch wird auch der Bürstenträger 21 nach oben und unten bewegt. Die lineare Bewegung des Bürstenträgers 21 wird mit Hilfe der Exzenteranordnung 22, 23 und des Führungsstiftes 20 in eine oszillierende Rotationsbewegung des Bürstenkopfes 18 mit einem Winkelbereich von etwa ± 79° umgesetzt.

Mit dem Getriebe 11 der vorliegenden Erfindung werden vorzugsweise Oszillationen des Bürstenkopfes 18 im Bereich von 30 bis 60 Hz, vorzugsweise von 45 bis 50 Hz eingestellt, die der Benutzer beim Reinigungsvorgang als angenehm empfindet.

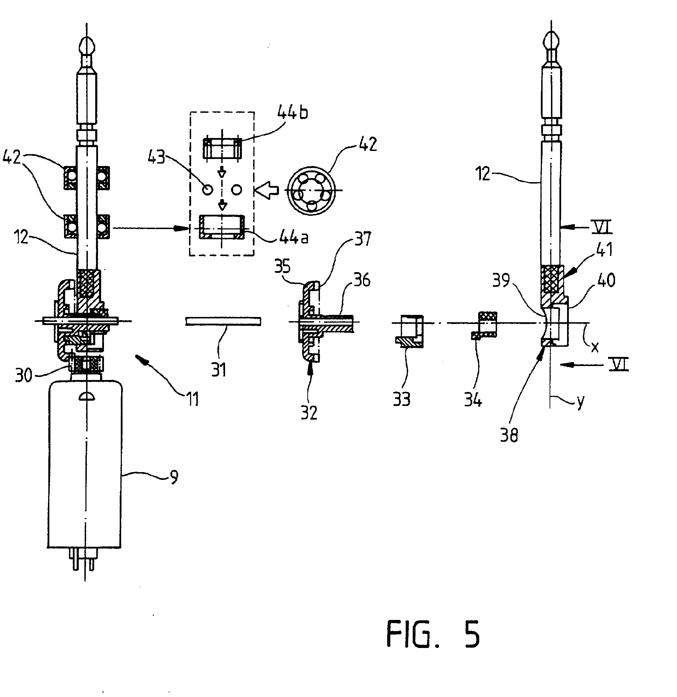

Als nächstes wird anhand der Fig. 4 und 5 der Aufbau des Getriebes 11 beschrieben.

Das Getriebe 11 wird von einem Elektromotor 9 angetrieben, der in einem Motorträger 27 im Handgriff 1 eingesetzt ist und mittels des Schalters 10 ein- und ausschaltbar ist. Der Elektromotor 9 ist ausgangsseitig mit einer Motorwelle 28 verbunden, die im wesentlichen parallel zur Längsachse des Handgriffs 1 angeordnet ist. Auf dieser Motorwelle 28 ist über eine Rutschkupplung 29 ein Zahnrad 30 angebracht. Das Zahnrad 30 steht mit dem Getriebe 11 der Zahnbürste in Eingriff.

Das Getriebe 11 besteht im wesentlichen aus einer Getriebewelle 31, die senkrecht zur Längsachse des Handgriffs 1 orientiert ist und die Achse des Getriebes 11 bildet, einem Antriebsrad bzw. Antriebszahnkranz 32, einem ersten unteren Exzenterrad 33 und einem zweiten oberen Exzenterrad 34. Die Getriebewelle 31 besteht vorteilhafterweise aus einem harten Stahl. Das Antriebsrad 32 hat im Querschnitt etwa die Form eines Schirmes 35 mit einem auf der Mittelachse angeordneten Hohlschaft 36. Der Hohlschaft sitzt auf der Getriebewelle 36 und ist drehfest mit dieser verbunden. Der Schirm weist an seiner umlaufenden Außenkante eine Verzahnung 37 auf, die mit dem Zahnkranz 30 auf der Motorwelle 28 in Eingriff steht, so daß eine Rotation der Motorwelle 28 um die Längsachse des Handgriffs 1 eine Rotation des Antriebsrades 32 senkrecht dazu um die Getriebewelle 31 bewirkt.

Das untere und das obere Exzenterrad 33, 34 sind drehfest auf dem Schaft 36 des Antriebsrades 32 befestigt. Das untere Ende der Antriebswelle 12 ist in einer Wellenhalterung 41 aufgenommen bzw. befestigt. In der Wellenhalterung 41 ist eine Aufnahmeöffnung 38 vorgesehen (siehe Fig. 5), die eine kreisrunde Ausnehmung 39 und eine ovale Ausnehmung 40 aufweist. Das untere Exzenterrad 33 ist in der kreisrunden Ausnehmung 39 und das obere Exzenterrad 34 ist in der ovalen Ausnehmung 40 der Aufnahmeöffnung 38 jeweils paßgenau und frei drehbar aufgenommen. Die beiden Exzenterräder 33 und 34, das Antriebsrad 32 und die Wellenhalterung 41 bestehen vorzugsweise aus einem Kunststoffmaterial, wie zum Beispiel Polyformaldehyd (POM). In der Wellenhalterung 41 ist die Antriebswelle 12 aufgenommen bzw. gehalten. Alternativ hierzu kann die Wellenhalterung 41 auch einstückig mit der Antriebswelle 12 ausgebildet sein, in diesem Fall ist die Aufnahmeöffnung 38 für die Exzenterräder 33, 34 des Getriebes 11 direkt im unteren Ende der Antriebswelle 12 vorgesehen.

Das drehfest mit dem Hohlschaft 36 des Antriebsrades 32 verbundene untere Exzenterrad 33 bewirkt durch seine exzentrische Drehung um die Getriebewelle 31 in der Ausnehmung 39 am unteren Ende der Antriebswelle 12 eine Auf- und Abwärtsbewegung der Wellenhalterung 41 und damit der Antriebswelle 12. Das obere Exzenterrad 34 dient der Stabilisierung der Antriebswelle 12 während der durch das untere Exzenterrad 33 bewirkten Hubbewegung im X-Y-Achsensystem, wobei die X-Achse durch die Getriebewelle 31 und die Y-Achse durch die Antriebswelle 12 gebildet werden.

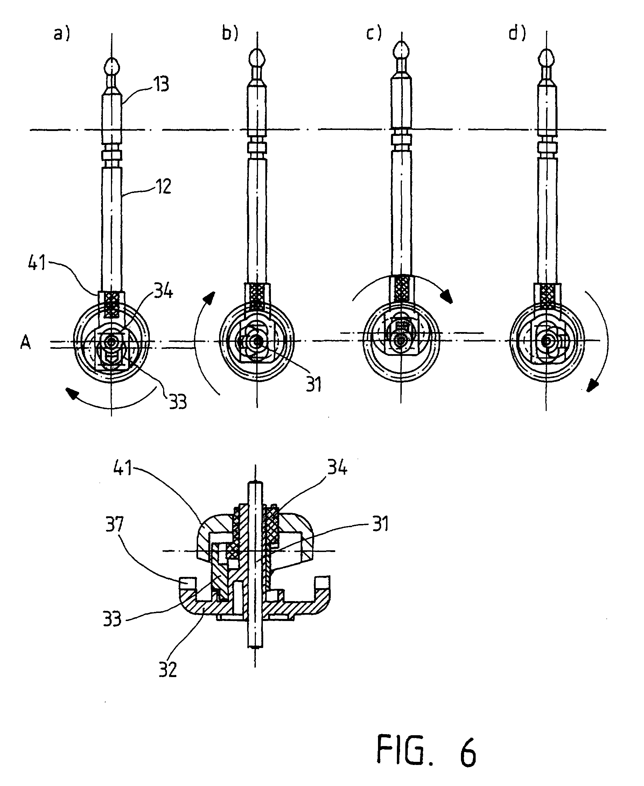

Die Funktionsweise des erfindungsgemäßen Getriebes 11 wird unter Bezugnahme auf Fig. 6 nochmals näher erläutert.

Fig. 6 zeigt in vier Darstellungen a) bis d) des Getriebes 11 und der Antriebswelle 12 in der Seitenansicht gemäß Linie VI-VI von Fig. 5 unterschiedliche Zustände des Bewegungsablaufes der durch das Getriebe 11 bewirkten Auf- und Abwärtsbewegung der Antriebswelle 12. Zusätzlich ist nochmals das Getriebe 11 mit seinen Bestandteilen in Draufsicht dargestellt.

In den vier Darstellungen von Fig. 6 liegt die Achse der Getriebewelle 31 jeweils auf der Höhenlinie A. In der ersten Darstellung a) befindet sich das untere Exzenterrad 33 in seiner tiefsten Position, so daß auch die Wellenhalterung 41 und damit die Antriebswelle 12 in ihre tiefste Position gezogen werden. Das obere Exzenterrad 34 befindet sich dagegen in seiner höchsten Stellung. In der zweiten Darstellung b), in der die Welle 31 eine Drehung um 90° im Uhrzeigersinn gegenüber der Stellung von Darstellung a) vorgenommen hat, befindet sich das untere Exzenterrad 33 in seiner am weitesten nach links ausgelenkten Position, so daß die Wellenhalterung 41 und damit auch die Antriebswelle 12 ihre mittlere Höhenposition einnehmen. Das obere Exzenterrad 34 befindet sich hier in seiner am weitesten nach rechts ausgelenkten Stellung. Nach einer weiteren Vierteldrehung der Getriebewelle 31 im Uhrzeigersinn befindet sich das untere Exzenterrad 33 in seiner höchsten Position, so daß auch die Wellenhalterung 41 und die Antriebswelle 12 in ihre höchste Position geschoben werden (Darstellung c)). Das obere Exzenterrad 34 befindet sich in diesem Fall in seiner tiefsten Stellung. Die letzte Darstellung d) zeigt untere Exzenterrad 33 in seiner am weitesten nach rechts ausgelenkten Position und das obere Exzenterrad 34 in seiner am weitesten nach links ausgelenkten Stellung, so daß sich die Wellenhalterung 41 und die Antriebswelle 12 in ihrer mittleren Höhenposition befinden. Anschließend dreht die Getriebewelle 31 im Uhrzeigersinn weiter bis wieder die Konstellation gemäß Darstellung a) erreicht wird. Die Auslenkung des oberen Exzenterrades 34 ist also genau gegenläufig zur Auslenkung des unteren Exzenterrades 33, so daß die Auf- und Abwärtsbewegung der Antriebswelle 12 stabilisiert wird. Die Exzentrizität des unteren Exzenterrades 33 ist dabei natürlich größer als die Exzentrizität des oberen Exzenterrades 34, so daß der Hub der Antriebswelle 12 durch die Summe der Exzentrizitäten der beiden Exzenterräder 33, 34 gegenüber der Getriebewelle 31 bestimmt wird.

Durch die so konstruierte Kraftübertragung vom Elektromotor 9 auf die Antriebswelle 12 wird ein sehr hoher Wirkungsgrad erzielt, d.h. es treten kaum Energieverluste in der Kopplung durch das Getriebe 11 auf. Da das obere Exzenterrad 34 die Bewegung der Antriebswelle 12 stabilisiert, treten auch keine Energieverluste durch Instabilitäten oder Schwankungen der Antriebswelle 12 auf, so daß die vom Elektromotor 9 zugeführte Energie vollständig bzw. zumindest weitestgehend in die Auf- und Abwärtsbewegung der Antriebswelle 12 umgesetzt wird. Darüber hinaus ist das derart ausgestaltete Getriebe 11 auch äußerst geräuscharm.

Wieder zurück zu den Fig. 4 und 5, ist die Antriebswelle 12 im Innern des Handgriffs 1 durch beispielsweise zwei Kugellager 42 gehalten und geführt, die entlang ihrer Längsachse angeordnet sind. Wie insbesondere aus der Detaildarstellung von Fig. 5 ersichtlich, bestehen die Kugellager 42 jeweils aus fünf Stahlkugeln 43, die in einem Kunststoffgehäuse 44 eingesetzt sind. Das Kunststoffgehäuse 44 der Kugellager 42 besteht beispielsweise aus einem Polyformaldehyd-Material (POM). Das Kugellagergehäuse 44 ist zweiteilig aufgebaut und besteht aus einem den inneren Laufring bildenden Sockel 44b und einer den äußeren Laufring bildenden Abdeckung 44a. Der innere Laufring 44b ist dabei derart konstruiert, daß die zwischen den beiden Laufringen 44a und 44b gehaltenen Kugeln 43 durch den inneren Laufring 44b ins Innere des Kugellagergehäuses 44 vorstehen und mit der Antriebswelle 12 in Kontakt kommen.

Die Kugellager 42 werden benutzt, um die Reibung der Antriebswelle sowie Überhitzungs- und Abnutzungseffekte an der Antriebswelle zu vermindern, die aufgrund der hohen Hubfrequenz der Antriebswelle 12 auftreten könnten. Dies wird insbesondere durch eine Schmierwirkung der Kugellager 42 für die Antriebswelle 12 erreicht.

Anstelle der oben beschriebenen Anzahl von fünf Kugeln 43 der Kugellager 42 sind ebenso Konstruktionen mit einer anderen Anzahl an Kugeln 43 möglich. Außerdem sind die Materialien der Kugellager 42 nicht auf die oben angegeben beschränkt. Prinzipiell sind alle bekannten Kugellager mit unterschiedlichen Materialien, Größen, etc. für die elektrisch antreibbare Zahnbürste gemäß der vorliegenden Erfindung verwendbar.

### Bezugszeichenliste

- 1: Handgriff
- 2: Bürstenaufsatz
- 3: Halterung
- 4: Ausnehmung
- 5: Aufbewahrungsfach
- 6: Deckel
- 7: Akku
- 8: Spule
- 9: Elektromotor
- 10: Schalter
- 11: Getriebe
- 12: Antriebswelle
- 13: Antriebswellen-Fortsatz
- 14: Farbring
- 15: Antriebswelle
- 16: Kupplungselement
- 17: Feder
- 18: Bürstenkopf
- 19: Schlitz
- 20: Stift
- 21: Bürstenträger
- 22: Exzenterwelle
- 23: Exzenterscheibe
- 24: Hauptwelle
- 25: Führungshülse
- 26: Bürstenkopfgehäuse
- 27: Motorträger
- 28: Motorwelle
- 29: Rutschkupplung
- 30: Zahnrad
- 31: Getriebewelle
- 32: Antriebsrad
- 33: unteres Exzenterrad
- 34: oberes Exzenterrad
- 35: Schirm
- 36: Hohlschaft
- 37: Verzahnung
- 38: Aufnahrneöffnung
- 39: kreisrunde Ausnehmung
- 40: ovale Ausnehmung
- 41: Wellenhalterung
- 42: Kugellager
- 43: Kugeln
- 44: Kugellagergehäuse
- 44a: äußerer Laufring
- 44b: innerer Laufring

## Patentansprüche

1. Elektrisch antreibbare Zahnbürste, mit
einem mit einer Antriebswelle (12, 15) verbundenen Bürstenkopf (18), wobei der Bürstenkopf drehbar um seine Längsachse gelagert ist;
einem in einem Handgriff (1) angeordneten Elektromotor (9); und
einem Getriebe (11), das eingangsseitig mit dem Elektromotor (9) und ausgangsseitig mit der Antriebswelle (12, 15) gekoppelt ist;
**dadurch gekennzeichnet,**
daß das Getriebe (11) ein erstes Exzenterrad (33) auf einer Getriebewelle (31), die im wesentlichen senkrecht zu der Antriebswelle (12, 15) angeordnet ist, ein zweites Exzenterrad (34) auf der Welle (31) und ein mit dem ersten und dem zweiten Exzenterrad (33, 34) gekoppeltes Antriebsrad (32) aufweist,
daß das erste Exzenterrad (33) in einer kreisrunden Ausnehmung (39) einer Halterung (41) der Antriebswelle (12, 15) aufgenommen ist, um die Antriebswelle (12, 15) nach oben und unten zu bewegen, und
daß das zweite Exzenterrad (34) in einer ovalen Ausnehmung (40) der Halterung (41) aufgenommen ist, um die Hubbewegung der Antriebswelle (12, 15) zu stabilisieren.

2. Elektrisch antreibbare Zahnbürste nach Anspruch 1,
**dadurch gekennzeichnet,**
daß das erste und das zweite Exzenterrad (33, 34) derart auf der Getriebewelle (31) befestigt sind, daß ihre Exzentrizitäten genau entgegengesetzt ausgerichtet sind, wobei die Exzentrizität des ersten Exzenterrades (33) größer als die des zweiten Exzenterrades (34) ist.

3. Elektrisch antreibbare Zahnbürste nach Anspruch 1 oder 2,
**dadurch gekennzeichnet,**
daß die Exzenterräder (33, 34), das Antriebsrad (32) und/oder die Wellenhalterung (41) aus Polyformaldehyd (POM) bestehen.

4. Elektrisch antreibbare Zahnbürste nach einem der vorhergehenden Ansprüche,
**dadurch gekennzeichnet,**
daß die Antriebswelle (12, 15) durch wenigstens ein Kugellager (42) geführt ist.

5. Elektrisch antreibbare Zahnbürste nach einem der vorhergehenden Ansprüche,
**dadurch gekennzeichnet,**
daß die Halterung (41) einstückig mit der Antriebswelle (12, 15) ausgebildet ist.

6. Elektrisch antreibbare Zahnbürste nach einem der vorhergehenden Ansprüche,
**dadurch gekennzeichnet,**
daß die Längsachse des Bürstenkopfes (18) etwa senkrecht zur Längsachse der Antriebswelle (12, 15) ausgerichtet ist.

7. Elektrisch antreibbare Zahnbürste nach Anspruch 6,
**dadurch gekennzeichnet,**
daß zwischen der Antriebswelle (12, 15) und dem Bürstenkopf (18) eine Umsetzungseinrichtung zur Umsetzung der Hubbewegung der Antriebswelle (12, 15) in die Rotationsbewegung des Bürstenkopfes (18) vorgesehen ist, wobei die Umsetzungseinrichtung eine auf einer mittigen Hauptwelle (24), die den Bürstenkopf als Drehachse trägt, gehaltene Exzenterscheibe (23) aufweist.

8. Elektrisch antreibbare Zahnbürste nach einem der vorhergehenden Ansprüche,
**dadurch gekennzeichnet,**
daß eine Einrichtung (19, 20) zur Führung und Begrenzung der Rotationsbewegung des Bürstenkopfes (18) vorgesehen ist.
